# EUROPEAN PATENT SPECIFICATION

(11) **EP 2 788 302 B1**
(45) Date of publication and mention of the grant of the patent: **28.03.2018**
(21) Application number: 12806262.7
(22) Date of filing: 05.12.2012
(51) Int. Cl.: C04B 35/5831, B24D 3/04

(54) **SINTERED COMPACT COMPRISING CUBIC BORON NITRIDE FOR USE AS CUTTING TOOL**
SINTERPRESSKÖRPER ENTHALTEND KUBISCHES BORNITRID FÜR DIE VERWENDUNG ALS SCHNEIDEWERKZEUG
CORPS FRITTE COMPRENANT DU NITRURE DE BORE UTILISE COMME OUTILS DE COUPE

(30) Priority: 05.12.2011 US 201161566798 P
(43) Date of publication of application: 15.10.2014
(73) Proprietor: Diamond Innovations, Inc., Worthington, OH 43085 (US)
(72) Inventor: MALIK, Abds-Sami, Westerville, Ohio 43082 (US)
(74) Representative: Neilson, Martin Mark
(86) International application number: PCT/US2012/067918
(87) International publication number: WO 2013/085979

(56) References cited:
- EP-A1- 2 778 146
- WO-A1-2012/089565
- JP-B2- 3 476 507
- US-A- 5 569 862
- US-A1- 2011 252 711

## Description

### TECHNICAL FIELD AND INDUSTRIAL APPLICABILITY

The present disclosure relates to cubic boron nitride (cBN) cutting tools and methods of making cBN cutting tools having improved wear resistance and toughness, and more specifically to cutting tools made from sintered compacts including cubic boron nitride and a binder phase that includes a single or multiple-layer nano-scale material such as graphene.

In the discussion of the background that follows, reference is made to certain structures and/or methods. However, the following references should not be construed as an admission that these structures and/or methods constitute prior art. Applicant expressly reserves the right to demonstrate that such structures and/or methods do not qualify as prior art.

The synthesis of cubic boron nitride (cBN) is conducted at high pressures and high temperatures, typically at pressures at or above 60 kBar and temperatures at or above 1350 °C. Aluminum and its alloys are often used for catalyzing the transformation of hexagonal boron nitride (hBN) to cBN at somewhat lower pressures, for example at pressures between about 45 kBar and 75 kBar. Resultant compacts of cBN powder (*i.e*., polycrystalline cBN), in which there is direct bonding between cBN particles to form a hard, tough solid mass, are useful in the machining of metal, for example.

Polycrystalline cBN (PCBN) compacts have been manufactured with high content of cBN (*e.g.,* greater than about 60 vol. %) in order to render the compacts hard and tough. However, it has been found that in certain machining applications such compacts do not exhibit good performance. For example, when machining hard steels (*e.g.,* greater than 50 HRc) or compacted graphite iron (CGI), the heat generated by friction at the tool tip may increase the temperature of the tool tip to greater than 1000 °C. This elevated temperature appears to promote back-conversion of the cBN to its hexagonal crystallographic form and leads to rapid wear and failure of the PCBN tool. This is commonly referred to as 'chemical wear' and can be mitigated by reducing the amount of cBN, for example to less than about 50 vol. %, and replacing it with conventional, heat resistant ceramics such as Al₂O₃, TiN, Si₃N₄, and the like. However, those conventional ceramics are less tough and generally quite brittle, so PCBN compacts including those materials in their composition are more prone to fail in the machining application by fracturing.

Additives have been considered to improve the fracture toughness of alumina (Al₂O₃) ceramics compacts, for example by adding zirconia (ZrO₂) at up to 15 vol. %. Ceramic whiskers, such as SiC whiskers, have also been added to hot-pressed alumina ceramic. Recently, graphene (*i.e*., nano-scale graphite particles in which individual, atomic layer graphite sheets have been separated) has been investigated for fracture toughening of silicon nitride (Si₃N₄) ceramics by the addition of up to 1.5 vol. % of graphene. However, the Si₃N₄ materials were spark plasma sintered, a process not applicable to the formation of PCBN compacts.

US5569862 discloses a boron nitride sintered body for cutting tools consisting of 20-80% by weight of a high-pressure phase boron nitride and 80-20% by weight of an intermetallic compound containing a titanium carbonitride Ti(C,N).

JP3476507 discloses a sintered compact composed of 10-70vol.% of cubic boron nitride and a binding phase consisting mainly of ceramics as the residual part with inevitable impurities. The binding phase is composed of 5-30vol.% of aluminum oxide, 3-20vol.% of aluminum nitride and/ or aluminum boride, 10-40vol.% of at least one kind selected from titanium carbide, titanium nitride and titanium carbonitride and 3-30vol.% of titanium boride.

### SUMMARY

In one embodiment, a sintered compact according to claim 1 is described for use in making a cutting tool, the sintered compact including 10 vol. % to 90 vol. % cubic boron nitride; and and a binder phase including one or more of A1203 , Si3N4 , TiN, TiC, TiCN; characterized in that the binder phase includes 0.1 vol. % to 10 vol. % a single or multiple layer nano-scale material and in that the single or multiple layer nano-scale material comprises at least one of graphene, MXene, white graphene and wherein MXene comprises transition metal carbides and carbonitrides and wherein the numerical values are plus or minus 10% of the number which is being used. In another embodiment, a method according to claim 6 is described of making a sintered compact for use in making a cutting tool. The method includes mixing a powder blend having 10 vol. % to 90 vol. % cubic boron nitride and a binder phase including one or more of A1203 , Si3N4 , TiN, TiC, TiCN; characterized in that the binder phase includes 0.1 vol. % to 10 vol. % a single or multiple layer nano-scale material;pressing the powder blend into a pill; and sintering the pill at high pressure and high temperature and wherein the single or multiple layer nano-scale material comprises at least one of graphene, MXene, white graphene and wherein the numerical values are plus or minus 10% of the number which is being used. A sintered cutting tool is described including a sintered compact according to claim 1, which comprises about 10 vol. % to about 90 vol.% cubic boron nitride, and a binder phase including conventional ceramic materials such as, for example alumina, titanium nitride, or silicon nitride, and including about 0.1 vol. % to about 10 vol.% of a single or multiple layer nano-scale material, wherein the single or multiple layer of nano-scale material has an oxygen content of less than about 2.0%.

It is to be understood that both the foregoing general description and the following detailed description are exemplary and explanatory and are intended to provide further explanation of the invention as claimed.

### BRIEF DESCRIPTION OF THE DRAWINGS

The following detailed description can be read in connection with the accompanying drawings in which like numerals designate like elements:
Figure 1 shows a graph of tool performance of an exemplary embodiment comparable to other sintered cubic boron nitride cutting tools as determined from the wear resistance test;
Figure 2 shows a tool test result for impact toughness of an exemplary embodiment comparable to other sintered cubic boron nitride cutting tools;
Figure 3 shows a representative X-ray diffraction pattern of an exemplary embodiment;
Figure 4 shows a Raman spectrum of graphene that was used in exemplary embodiments; and
Figure 5 shows a representative Raman spectrum of an exemplary embodiment.

### DETAILED DESCRIPTION

Before the present methods, systems and materials are described, it is to be understood that this disclosure is not limited to the particular methodologies, systems and materials described, as these may vary. For example, as used herein, the singular forms "a," "an," and "the" include plural references unless the context clearly dictates otherwise. In addition, the word "comprising" as used herein is intended to mean "including but not limited to." Unless defined otherwise, all technical and scientific terms used herein have the same meanings as commonly understood by one of ordinary skill in the art.

As used herein, the term "about" means plus or minus 10% of the numerical value of the number with which it is being used. Therefore, about 50% means in the range of 45%-55%. As used herein, the term "superabrasive particles" may refer ultra-hard particles having a Knoop hardness of 5000 KHN or greater. The superabrasive particles may include diamond, cubic boron nitride, for example.

As used herein, the term "graphene" refers to a form of graphitic carbon, in which the carbon atoms are arranged in a 2-dimensional hexagonal lattice, that can be as thin as one atomic layer (<1 nm). These layers can also exist as multiple stacked sheets. The graphene particles have a very high aspect ratio such that, thickness (the z-axis) can be on the order of 100 nm (nanometers) whereas the 'x' and 'y' dimensions can be on the order of 100 µm (microns). The oxygen content of the material may be between about 1.0% to about 5.0%, in some embodiments about 1.2% to about 2.0% and in some embodiments, about 1.4%.

Hexagonal boron nitride (hBN), which has an atomic structure similar to graphite, can also form a graphene analog, known as 'white graphene.' White graphene can be formed in single- or multi-layer sheets, structurally analogous to graphene. White graphene, when mixed with cubic boron nitride particles and sintered at HPHT may display similar advantageous properties.. Therefore, although the examples described herein are set forth specifically with regard to graphene, similar examples may be constructed using white graphene.

Other materials, such as MXene, which are also similar to graphene, have the general chemical formula Mₙ₊₁Xₙ where M is a transition metal from group 4 or 5 and X is C or N. Examples include Ti₂C or Ti₃CN. They can be described as 2-dimensional metal carbide or metal carbonitride sheets. Therefore, although the examples described herein are set forth specifically with regard to graphene, it is expected that similar examples can be constructed using MXene.

A cubic boron nitride (cBN) cutting tool is described that can be operated at higher speeds and last longer than cutting tools made from currently available materials by incorporating carbon in the form of graphene into the tool. Replacing even small amounts of the ceramic in a cubic boron nitride cutting tool with graphene improves the tools fracture toughness and results in a material with improved cutting performance and longevity. The improvement is enhanced further by using powder blending methods that increase homogeneity, such as ultrasonic mixing, attritor milling and spray drying, provided that the compositional parameters have been optimized.

In one exemplary embodiment, the cutting tool comprises a sintered compact including about 10 vol. % to about 90 vol.% cubic boron nitride and a binder phase, wherein the binder phase includes about 0.1 vol. % to about 10 vol.% of a single or multiple layer nano-scale material. In exemplary embodiments, the compact includes about 30 vol. % to about 80 vol.% cubic boron nitride and the binder phase includes about 1 vol. % to about 3 vol.% of a single or multiple layer nano-scale material. The single or multiple layer of nano-scale material comprises at least one of graphene, MXene, white graphene. In an embodiment, graphene (product no. N008-100-P-10) produced by Angstron Materials, Dayton, Ohio, USA was used. The binder phase includes Al₂O₃, Si₃N₄, TiN, TiC, TiCN or mixtures thereof. In embodiments, the cubic boron nitride has a grain size of less than about 20 microns.

Machining of certain cast iron alloys, such as compacted graphite iron (CGI) or ductile iron are challenging because of the high frictional heat generated during the machining process. Heating of tool tip by friction (often exceeding 1000 °C) causes high cBN content PCBN tools (generally having greater than about 60 vol. % cBN) to wear rapidly due to chemical reaction of the cBN with iron. Replacing cBN with more inert ceramics such as alumina may mitigate this problem with heat, but at the expense of reduced fracture toughness. As the cBN content becomes much less than about 40 vol. %, wear becomes dominated by brittle fracturing. Thus, a need exists to provide a PCBN tool with low cBN content but possessing excellent fracture toughness properties.

Without being bound by theory, it is hypothesized that the graphene serves as a toughening agent to arrest crack propagation in the ceramic phase. A tool formed of a composition of cBN plus an amount of graphene can thus be operated at higher speeds and last longer than currently available materials by incorporating a material that can improve performance by increasing its fracture toughness.

In the following descriptions of experiments, specified sources and equipment are exemplary, illustrative of a working embodiment, and not intended to limit or otherwise be bound to the illustrative parameters. Other suitable sources and equipment can be utilized within the scope of the invention as defined in the appended claims.

### Experimental Procedures - Blends:

Several tools were made incorporating graphene (produced by Angstron Materials, Dayton, Ohio, USA (product no. N008-100-P-10)) into a cBN matrix. An attritor mill was used to mix powder blends with isopropanol in a 250 mL capacity jar with WC milling media at 200 rpm for 10 minutes. The resulting slurry was dried in an oven, in air, for several hours then passed through a 40 mesh screen. The formulations for three exemplary powder blends are listed in Table 1.

**Table 1 - Compositions of powder blends in volume %.**

| | Al₂O₃ | Si₃N₄ | Y₂O₃ | graphene | cBN |
|---|---|---|---|---|---|
| 127-1 | 63 | 9.2 | 0.7 | 2.5 | 24 |
| 127-2 | 62 | 9.0 | 0.7 | 4.9 | 24 |
| 128-1 | 65 | 9.4 | 0.8 | 0 | 25 |

### Experimental Procedures - Sintered Bodies:

Sintered compacts were produced by conventionally pressing the powder blend into pills. The cubic boron nitride had a grain size of less than about 20 microns. The graphene had an oxygen content of less than about 2.0%. The pills were loaded into a high pressure cell and pressed on a belt-type High Pressure - High Temperature (HPHT) apparatus and sintered at about 65 kBar and about 1500 °C for about 15 minutes to produce compacts. In some cases, sintering may be conducted at pressures less than about 75 kBar and for times of about 15 to 30 minutes. In other exemplary embodiments, sintering may be performed at pressures of about 45 kBar and a temperature of about 1500 °C for about 15 to 30 minutes.

The sintered compacts were finished by grinding to 3.2 mm overall thickness and then cut into square CNGA-432 tool inserts having edge geometry of 0.004" (0.1 mm) x 30° chamfer + 0.001" (25 microns) hone that were fashioned for tool testing.

### Experimental Procedures - Machining Tests:

Machining tests were done to assess wear resistance and fracture toughness as described below.
(1) Wear resistance test - 8620 case-hardened steel: Wear resistance was evaluated on 8620 steel with a surface hardness range of HRc 55-63. A constant surface speed of 656 sfm (200 m/min.), a feed rate of 0.008 ipr (0.2 mm/rev), and a depth of cut of 0.006" (0.15 mm) were maintained. Flank wear on the inserts was measured after every pass. Tests were terminated once the flank wear reached a set wear limit of 0.008" (0.2 mm) or chipping of the edge occurred. Tool life was defined as the time required attaining the set wear limit or chipping of the cutting edge.
(2) Impact toughness test - 52100 steel, HRc 60: Impact resistance (toughness) was determined by interrupted facing on 52100 steel, with HRc 60. The interruption was provided by a 0.400" (10 mm) wide x 0.840" (21 mm) deep slot in the workpiece. A constant surface speed of 394 sfm (120 m/min.) was maintained, while depth of cut and feed rate were incrementally increased. The criterion of failure was a chipped cutting edge. If the insert had failed, then that feed rate was determined to be the failure feed rate.
(3) Wear resistance test (CGI): Compacted graphite iron (CGI) test cylinders (145 mm OD) with 95% pearlite, 10% nodularity and 200-220 BHN were used. Turning tests were performed with constant surface speed of 1200 SFM, a 0.020" depth of cut, and 0.010 ipr feed rate using coolant (5% Trim E206 Soluble Oil). Flank wear was measured after every pass. Tests were terminated once the flank wear reached 0.008" or chipping of the edge occurred.

Flank wear on inserts and surface roughness on the work piece Ra and Rz were measured after every pass and recorded. Wear on the flank and crater on the rake face were photographed and documented after each pass and tests were terminated once the flank wear reached 0.008" (0.2 mm) or chipping of the edge occurred. Tool life was defined as the time required to attain the set wear limit or chipping of the cutting edge. Three edges of each sample were tested.

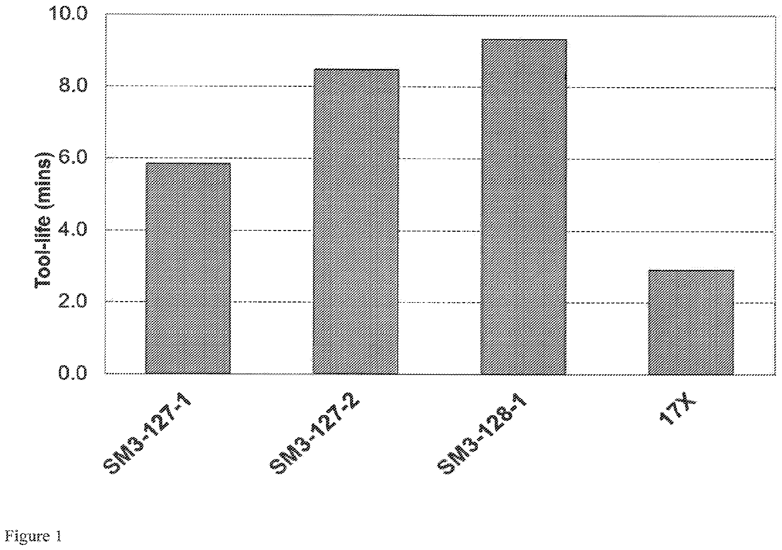

Figure 1 shows a graph of tool performance as determined from the wear resistance test). For comparison, a standard tool material '17X' is also plotted. All of the experimental tools perform better than the standard. In particular, the tools containing graphene, 127-1 and 127-2, each perform 3x to 4x times better. However, it can also been seen that the tool containing no graphene, 128-1 also performs very well relative to the standard tool. Referring to Table 1, all three experimental tools were very similar in composition with the only difference being the graphene content.

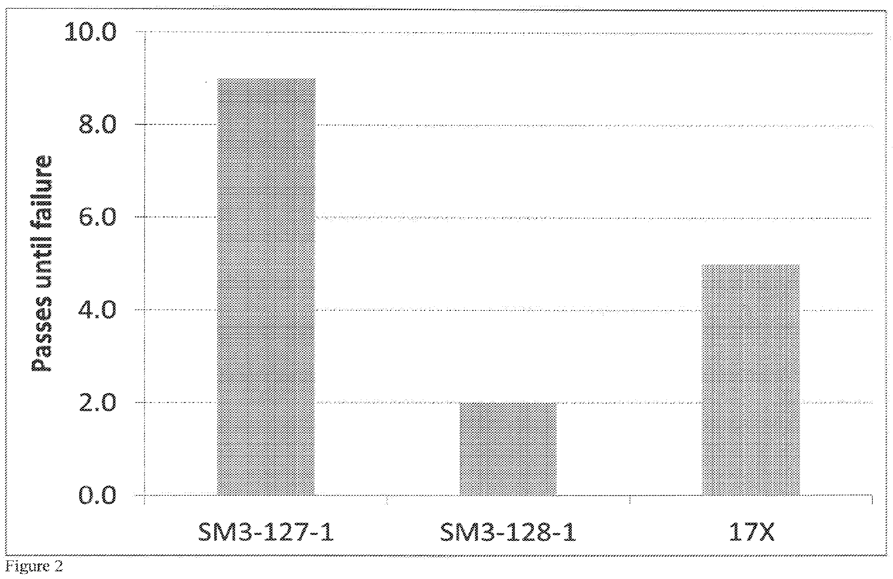

Turning to the tool test results for impact toughness (paragraph (2)), the results for 127-1, and 128-1 are also plotted against the standard tool in Figure 2. It can be seen that, whereas 128-1 performed quite well in the wear resistance test, its performance was less than 50% compared to the standard. However, the tool material formulated with graphene, 127-1, achieved two times the performance of the standard. Good performance in both impact toughness and wear resistance is desirable in a useful tool material. On the contrary, if good results are achieved on only one of the tests, the tool material is not suitable for practical applications.

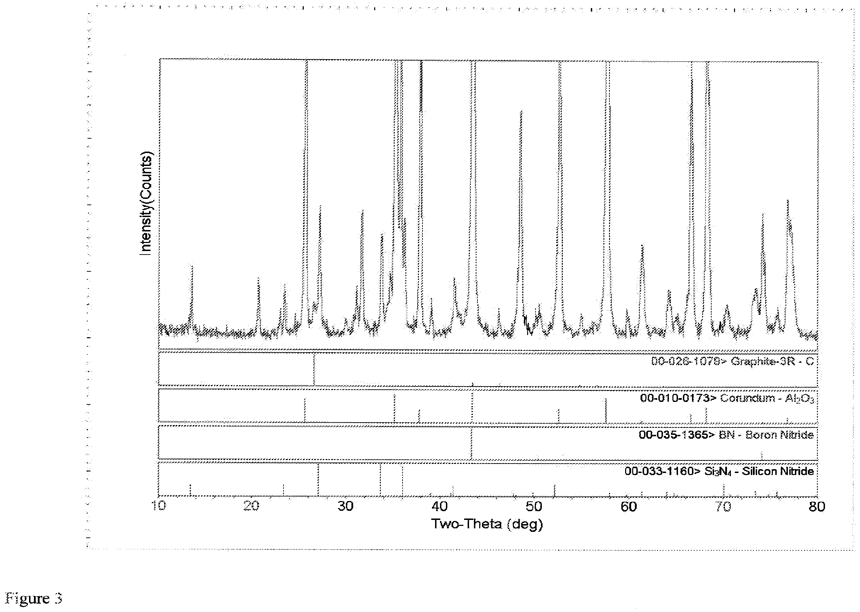

Figure 3 is a representative X-ray diffraction pattern of sample 127-1. The XRD pattern of Figure 3 shows that some amount of graphene survived the sintering process and is present in the sintered compacts. In particular, the XRD pattern evidences strong peaks for alumina, silicon nitride, and cBN, as well as smaller peaks corresponding to graphite. Because graphene has a similar XRD signature to graphite, and because no other source of graphite is expected to be present in the sintered compacts, it is concluded that these graphite peaks indicate the presence of graphene. The peaks in the diffraction pattern can be indexed to cBN, alumina, silicon nitride, and 'graphite.' A standard XRD pattern for graphene does not exist, so the graphite peaks are arising from the graphene.

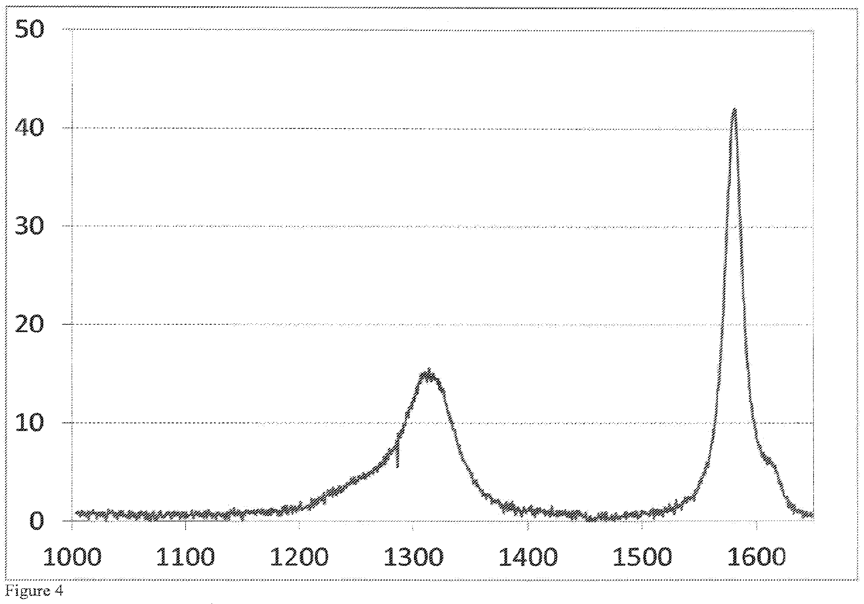

In order to get further confirmation that graphene exists in these samples, Raman spectroscopy was done. Figure 4 shows a Raman spectrum of graphene that was used in these experiments. It can be seen that the graphene Raman spectrum can be described as a broad peak centered around 1300 cm⁻¹ and a sharper peak at around 1590 cm⁻¹.

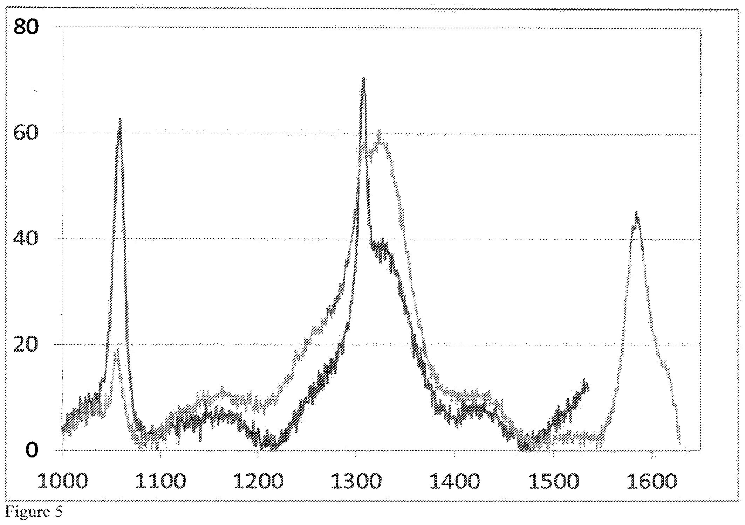

A representative Raman spectrum (Figure 5) of sample 127-1 shows that the peaks corresponding to graphene are also observed. Two spectra taken from different areas of the sample are remarkably similar, indicating that the sample is homogeneous. Some additional peaks are also observed in the sample, at 1050 cm-1 and a sharp peak at 1300 cm-1 and these correspond to the Raman spectrum of cBN.

## Claims

1. A sintered compact for use in making a cutting tool, comprising:
10 vol. % to 90 vol. % cubic boron nitride; and
and a binder phase including one or more of Al₂O₃, Si₃N₄, TiN, TiC, TiCN;
**characterized in that** the binder phase includes 0.1 vol. % to 10 vol. % a single or multiple layer nano-scale material and **in that** the single or multiple layer nano-scale material comprises at least one of graphene, MXene, white graphene and wherein MXene comprises transition metal carbides and carbonitrides
and wherein the numerical values are plus or minus 10% of the number which is being used.

2. The sintered compact of claim 1, wherein the sintered compact comprises:
30 vol. % to 80 vol. % cubic boron nitride; and
the binder phase including 1 vol. % to 3 vol. % graphene
and wherein the numerical values are plus or minus 10% of the number which is being used.

3. The sintered compact of any one of claim 1 or claim 2, wherein the cubic boron nitride has a grain size of less than 20 microns and wherein the numerical values are plus or minus 10% of the number which is being used.

4. The sintered compact of any one of claims 1 to 3, wherein the sintering is performed at a pressure of 45 kBar and a temperature of 1500 °C for 15 to 30 minutes and wherein the numerical values are plus or minus 10% of the number which is being used.

5. The sintered compact of any one of claims 1 to 4, wherein the graphene has an oxygen content of less than 2.0% and wherein the numerical values are plus or minus 10% of the number which is being used.

6. A method of making a sintered compact for use in making a cutting tool, the method comprising:
mixing a powder blend having 10 vol. % to 90 vol. % cubic boron nitride and a binder phase including one or more of Al₂O₃, Si₃N₄, TiN, TiC, TiCN;
**characterized in that** the binder phase includes 0.1 vol. % to 10 vol. % a single or multiple layer nano-scale material;
pressing the powder blend into a pill; and
sintering the pill at high pressure and high temperature and wherein the single or multiple layer nano-scale material comprises at least one of graphene, MXene, white graphene and wherein the numerical values are plus or minus 10% of the number which is being used.

7. The method of claim 6, wherein the powder blend comprises:
30 vol. % to 80 vol. % cubic boron nitride; and
the binder phase including 1 vol. % to 3 vol. % graphene and wherein the numerical values are plus or minus 10% of the number which is being used.

8. The method of any one of claims 6 to 7, wherein the cubic boron nitride has a grain size of less than 20 microns and wherein the numerical values are plus or minus 10% of the number which is being used.

9. The method of any one of claims 6 to 8, wherein the sintering is performed at a pressure of 45 kBar and a temperature of 1500 °C for 30 minutes and wherein the numerical values are plus or minus 10% of the number which is being used.

10. The method of any one of claims 6 to 9, wherein the graphene has an oxygen content of less than 2.0% and wherein the numerical values are plus or minus 10% of the number which is being used.

## Patentansprüche

1. Sintererzeugnis zur Verwendung bei der Herstellung eines Schneidewerkzeugs, umfassend:
10 Vol.-% bis 90 Vol.-% kubisches Bornitrid und
eine Bindemittelphase, die eins oder mehrere von Al₂O₃, Si₃N₄, TiN, TiC, TiCN umfasst;
**dadurch gekennzeichnet, dass** die Bindemittelphase 0,1 Vol.-% bis 10 Vol.-% eines ein- oder mehrschichtigen nanoskaligen Materials umfasst und dass das ein- oder mehrschichtige nanoskalige Material mindestens eins von Graphen, MXen, weißem Graphen umfasst und wobei MXen Übergangsmetallcarbide und -carbonitride umfasst
und wobei die numerischen Werte plus oder minus 10% der Zahl, die verwendet wird, sind.

2. Sintererzeugnis nach Anspruch 1, wobei das Sintererzeugnis umfasst:
30 Vol.-% bis 80 Vol.-% kubisches Bornitrid und
die Bindemittelphase, die 1 Vol.-% bis 3 Vol.-% Graphen umfasst,
und wobei die numerischen Werte plus oder minus 10% der Zahl, die verwendet wird, sind.

3. Sintererzeugnis nach Anspruch 1 oder Anspruch 2, wobei das kubische Bornitrid eine Korngröße von weniger als 20 Mikrometer hat und wobei die numerischen Werte plus oder minus 10% der Zahl, die verwendet wird, sind.

4. Sintererzeugnis nach einem der Ansprüche 1 bis 3, wobei das Sintern bei einem Druck von 45 kbar und bei einer Temperatur von 1500°C für 15 bis 30 Minuten durchgeführt wird und wobei die numerischen Werte plus oder minus 10% der Zahl, die verwendet wird, sind.

5. Sintererzeugnis nach einem der Ansprüche 1 bis 4, wobei das Graphen einen Sauerstoffgehalt von nicht weniger als 2,0% hat und wobei die numerischen Werte plus oder minus 10% der Zahl, die verwendet wird, sind.

6. Verfahren zur Herstellung eines Sintererzeugnisses zur Verwendung bei der Herstellung eines Schneidewerkzeugs, wobei das Verfahren umfasst:
Mischen einer Pulvermischung, die 10 Vol.-% bis 90 Vol.-% kubisches Bornitrid hat, und einer Bindemittelphase, die eins oder mehrere von Al₂O₃, Si₃N₄, TiN, TiC, TiCN umfasst;
**dadurch gekennzeichnet, dass** die Bindemittelphase 0,1 Vol.-% bis 10 Vol.-% eines ein- oder mehrschichtigen nanoskaligen Materials umfasst;
Pressen der Pulvermischung zu einer Pille und
Sintern der Pille bei hohem Druck und hoher Temperatur und wobei das ein- oder mehrschichtige nanoskalige Material wenigstens eins von Graphen, MXen, weißem Graphen umfasst und wobei die numerischen Werte plus oder minus 10% der Zahl, die verwendet wird, sind.

7. Verfahren nach Anspruch 6, wobei die Pulvermischung umfasst:
30 Vol.-% bis 80 Vol.-% kubisches Bornitrid und
die Bindemittelphase, die 1 Vol.-% bis 30 Vol.-% Graphen umfasst, und wobei die numerischen Werte plus oder minus 10% der Zahl, die verwendet wird, sind.

8. Verfahren nach einem der Ansprüche 6 bis 7, wobei das kubische Bornitrid eine Korngröße von weniger als 20 Mikrometer hat und wobei die numerischen Werte plus oder minus 10% der Zahl, die verwendet wird, sind.

9. Verfahren nach einem der Ansprüche 6 bis 8, wobei das Sintern bei einem Druck von 45 kbar und bei einer Temperatur von 1500°C für 30 Minuten durchgeführt wird und wobei die numerischen Werte plus oder minus 10% der Zahl, die verwendet wird, sind.

10. Verfahren nach einem der Ansprüche 6 bis 9, wobei das Graphen einen Sauerstoffgehalt von weniger als 2,0% hat und wobei die numerischen Werte plus oder minus 10% der Zahl, die verwendet wird, sind.

## Revendications

1. Corps fritté pour son utilisation dans la fabrication d'un outil de coupe, comprenant :
10 % en volume à 90 % en volume de nitrure de bore cubique ; et
et une phase de liant comprenant un ou plusieurs parmi Al₂O₃, Si₃N₄, TiN, TiC, TiCN ;
**caractérisée en ce que** la phase de liant comprend 0,1 % en volume à 10 % en volume d'un matériau nanométrique en mono- ou multi-couche et **en ce que** le matériau nanométrique en mono- ou multi-couche comprend au moins l'un parmi le graphène, le MXène, le graphène blanc et dans lequel le MXène comprend des carbures et carbonitrures de métaux de transition
et dans lequel les valeurs numériques sont plus ou moins 10 % du nombre qui est utilisé.

2. Corps fritté selon la revendication 1, dans lequel le corps fritté comprend :
30 % en volume à 80 % en volume de nitrure de bore cubique ; et
la phase de liant comprenant 1 % en volume à 3 % en volume de graphène
et dans lequel les valeurs numériques sont plus ou moins 10 % du nombre qui est utilisé.

3. Corps fritté selon l'une quelconque parmi la revendication 1 ou la revendication 2, dans lequel le nitrure de bore cubique présente une taille de grain inférieure à 20 microns et dans lequel les valeurs numériques sont plus ou moins 10 % du nombre qui est utilisé.

4. Corps fritté selon l'une quelconque des revendications 1 à 3, dans lequel le frittage est réalisé à une pression de 45 kBar et à une température de 1500 °C pendant 15 à 30 minutes et dans lequel les valeurs numériques sont plus ou moins 10 % du nombre qui est utilisé.

5. Corps fritté selon l'une quelconque des revendications 1 à 4, dans lequel le graphène présente une teneur en oxygène inférieure à 2,0 % et dans lequel les valeurs numériques sont plus ou moins 10 % du nombre qui est utilisé.

6. Procédé de fabrication d'un corps fritté pour son utilisation dans la fabrication d'un outil de coupe, le procédé comprenant :
le mélange d'un mélange pulvérulent contenant 10 % en volume à 90 % en volume de nitrure de bore cubique et d'une phase de liant comprenant un ou plusieurs parmi Al₂O₃, Si₃N₄, TiN, TiC, TiCN ;
**caractérisée en ce que** la phase de liant comprend 0,1 % en volume à 10 % en volume d'un matériau nanométrique en mono- ou multi-couche ;
le pressage du mélange pulvérulent pour obtenir un comprimé ; et
le frittage du comprimé à pression élevée et à température élevée et dans lequel le matériau nanométrique en mono- ou multi-couche comprend au moins l'un parmi le graphène, le MXène, le graphène blanc et dans lequel les valeurs numériques sont plus ou moins 10 % du nombre qui est utilisé.

7. Procédé selon la revendication 6, dans lequel le mélange pulvérulent en comprend :
30 % en volume à 80 % en volume de nitrure de bore cubique ; et
la phase de liant comprenant 1 % en volume à 3 % en volume de graphène et dans lequel les valeurs numériques sont plus ou moins 10 % du nombre qui est utilisé.

8. Procédé selon l'une quelconque des revendications 6 et 7, dans lequel le nitrure de bore cubique présente une taille de grain inférieure à 20 microns et dans lequel les valeurs numériques sont plus ou moins 10 % du nombre qui est utilisé.

9. Procédé selon l'une quelconque des revendications 6 à 8, dans lequel le frittage est réalisé à une pression de 45 kBar et à une température de 1500 °C pendant 15 à 30 minutes et dans lequel les valeurs numériques sont plus ou moins 10 % du nombre qui est utilisé.

10. Procédé selon l'une quelconque des revendications 6 à 9, dans lequel le graphène présente une teneur en oxygène inférieure à 2,0 % et dans lequel les valeurs numériques sont plus ou moins 10 % du nombre qui est utilisé.
